# EUROPÄISCHE PATENTSCHRIFT

(11) **EP 3 193 045 B1**
(45) Veröffentlichungstag und Bekanntmachung des Hinweises auf die Patenterteilung: **20.03.2019**
(21) Anmeldenummer: 16151331.2
(22) Anmeldetag: 14.01.2016
(51) Int. Cl.: F16J 15/16, F16J 15/3244, B41F 31/02, B41F 31/18

(54) **DICHTUNGSELEMENT FÜR DIE STIRNSEITIGE ABDICHTUNG EINER RAKELKAMMER**
SEALING ELEMENT FOR SEALING OF THE END FACES OF A DOCTOR BLADE CHAMBER
ÉLÉMENT D'ÉTANCHÉITE POUR ÉTANCHER LES FACES LATERALES D'UNE CHAMBRE À RACLE

(43) Veröffentlichungstag der Anmeldung: 19.07.2017
(73) Patentinhaber: Windmöller & Hölscher KG, 49525 Lengerich (DE)
(72) Erfinder: Elbers-Schrichten, Alexander, 49525 Lengerich (DE); Prigge, Jörg, 49525 Lengerich (DE); Ihme, Andreas, 49525 Lengerich (DE); Benke, Thomas, 49525 Lengerich (DE)

(56) Entgegenhaltungen:
- EP-A1- 0 111 141
- EP-A1- 2 252 460
- WO-A2-2008/021090
- DE-A1- 1 961 033
- DE-C1- 4 447 123
- US-A- 5 012 736

## Beschreibung

Die Erfindung betrifft ein Dichtungselement für die stirnseitige Abdichtung einer Rakelkammer einer Flexodruckmaschine. Eine Farbkammer nach dem Stand der Technik ist beispielsweise aus der DE 197 34 910 A1 bekannt, in der die Rakelkammer einer Flexodruckmaschine beschrieben ist.
Bei Flexodruckmaschinen wird die Druckfarbe auf den Druckzylinder mittels einer Rasterwalze aufgetragen, die ihrerseits mit Hilfe einer Rakelkammer eingefärbt wird. Die Rasterwalze weist an ihrer Oberfläche ein regelmäßiges Raster aus flachen Näpfchen auf, die mit Druckfarbe gefüllt werden, wenn sich der betreffende Umfangsabschnitt der Rasterwalze durch die mit Druckfarbe gefüllte Farbkammer der Rakelkammer bewegt. Beim Abrollen an dem Druckzylinder wird dann die so aufgenommene Druckfarbe an den Druckzylinder abgeben.
Die Farbkammer ist Teil der Rakelkammer und wird in deren Längsrichtung durch zwei Rakelmesser und an deren Stirnseiten durch zwei Dichtungselemente begrenzt. Herkömmliche Dichtungselemente dieser Art bestehen üblicherweise aus einem nachgiebigen Material, wie etwa Schaumstoff oder Filz. Das Material des Dichtungselements muss dabei verschiedene Anforderungen erfüllen. Es muss einerseits eine zuverlässige und dauerhafte Abdichtung der Farbkammer gewährleisten, sollte jedoch andererseits im Hinblick auf die Reibung zwischen dem Dichtungselement und der rotierenden Rasterwalze eine möglichst hohe Abriebfestigkeit aufweisen. Darüber hinaus muß das Material gegenüber den eingesetzten Druckfarben und Lösungsmitteln chemisch und mechanisch beständig sein. Die Druckfarbe, die mit der Oberfläche des Dichtungselementes in Berührung kommt, kann einerseits zu einem Quellen und Aufweichen des Materials führen und kann andererseits nach dem Eintrocknen der Druckfarbe zu einer Versprödung des Materials führen.
Weiterhin muss das Dichtungselement eine geeignete Elastizität und Steifigkeit aufweisen. Je steifer das Dichtungselement ist und je größer die Kraft ist, mit der das Dichtungselement gegen die Rasterwalze gepresst wird, desto höher ist die Dichtungswirkung, aber desto größer ist gleichzeitig auch der Verschleiß aufgrund der Reibung der Rasterwalze. Umgekehrt können bei einem relativ weich ausgelegten Dichtungselement an verschiedenen Stellen Leckagen auftreten, wie etwa an der Berührungsfläche zwischen Rasterwalze und dem Dichtungselement oder auch an der Berührungsfläche zwischen dem Dichtungselement und der entsprechenden Passform, in der das Dichtungselement gehalten wird. Weiterhin ist zu bedenken, dass es beim Betrieb der Druckmaschine zu einem Verschleiß an den Rakelmessern kommt, sodass sich dadurch die Geometrie des abzudichtenden Querschnitts verändert, was ebenfalls durch das Dichtungselement ausgeglichen werden muss.
In allen beschriebenen Fällen kommt es letztlich zu einem hohen Verschleiß an dem Dichtungselement, sodass das Dichtungselement regelmäßig ausgetauscht werden muss. Dies hat wiederum entsprechende Wartungs- und Stillstandskosten an der betreffenden Druckmaschine zur Folge.
Aufgabe der Erfindung ist es daher, den Verschleiß an dem Dichtungselement einer Rakelkammer zu reduzieren.
Diese Aufgabe wird durch die Merkmale der unabhängigen Patentansprüche gelöst.
Bei dem erfindungsgemäßen Dichtungselement handelt es sich um ein Dichtungselement für die stirnseitige Abdichtung einer Rakelkammer einer Flexodruckmaschine, mit den Merkmalen des Anspruchs 1.

Bei dem erfindungsgemäßen Verfahren handelt es sich um ein Verfahren zum Betreiben einer Flexodruckmaschine mit einer Rakelkammer, mit den Merkmalen des Anspruchs 5.

Überraschenderweise kann mit der Erfindung eine Vielzahl von Vorteilen erzielt werden. Zunächst einmal kann grundsätzlich die Lebensdauer der verwendeten Dichtung gesteigert und somit die Anzahl der Wartungsintervalle reduziert werden. Sodann kann bei stillstehender Walze ein Antrocknen der Dichtung am Walzenkörper verhindert werden. Außerdem wurde festgestellt, dass sich die Reibung zwischen Walzenkörper und Dichtungskörper reduziert, was zu einer geringeren Verlustleistung an den Walzenantrieben und damit zu einer entsprechenden Energieeinsparung führt. Schließlich lassen sich an der gesamten Druckmaschine bessere Laufeigenschaften mit einer geringeren Geräuschentwicklung feststellen.

Bei der Druckluft kann anstelle der Luft auch ein anderes Gas verwendet werden, beispielsweise Schutzgas, das geeignet ist, den Sauerstoff in der Umgebungsluft zu verdrängen (beispielsweise Stickstoff bzw. N₂), um so ein Eintrocknen von Farbe an der Dichtungsfläche zu verhindern.

Nach einer bevorzugten Ausführungsform ist vorgesehen, dass das Gas mit mindestens einem weiteren Fluid angereichert ist, das sich im Strömungsfilm ausbreitet und die Dichtungswirkung erhöht. So ist es zum Beispiel denkbar, als primäres Fluid Luft zu verwenden, die mit zerstäubten Tröpfchen einer Flüssigkeit angereichert wird. Als Flüssigkeit wird dabei vorzugsweise das betreffende Lösungsmittel der gerade verdruckten Farbe verwendet, d.h. in der Regel Ethanol oder Wasser. Besonders Vorzugsweise ist eine Umschaltvorrichtung vorgesehen, mit der bei einem Farbwechsel auf die geeignete Flüssigkeit umgeschaltet werden kann, die in dem strömenden Gas zerstäubt werden soll.

Darüber hinaus ist es auch denkbar, dass das Fluid mit Feststoffpartikeln angereichert wird. Beispielsweise können PTFE-Partikel in das Fluid eingebracht werden (z.B. mit einem Durchmesser von 0,5 µm). PTFE (Polytetrafluorethen) ist ein lineares Polymer aus Kohlenstoff und Fluor mit einem sehr niedrigen Reibungskoeffizienten. Die PTFE-Partikel lagern sich an der Dichtungsfläche ab und erhöhen auf diese Weise sowohl die Gleiteigenschaften also auch die Dichtungseigenschaften der Dichtungsfläche. Außerdem wurde festgestellt, dass mit dieser Maßnahme die Dichtungsfläche quasi imprägniert wird, sodass sich weniger Farbpartikel an der Dichtungsfläche anlagern können.

Nach einer Ausführungsform, welche nicht Teil der Erfindung ist, ist vorgesehen, dass das Dichtungselement mindestens eine Materialkomponente mit elastischen Eigenschaften aufweist. Als elastische Materialkomponenten kommen beispielsweise Materialen wie Schaumstoffe, Filze oder Synthesekautschuke (beispielsweise Ethylen-Propylen-Dien-Kautschuk bzw. EPDM oder Ethylen-Propylen-Kautschuk bzw. EPM) in Betracht. Die Stauchhärte des Materials wird derart gewählt, dass hierdurch im Betrieb eine geeignete Vorspannung der Dichtungsfläche gegenüber dem Walzenkörper hervorgerufen wird.

Eine andere Variante, welche ebenfalls nicht Teil der Erfindung ist, besteht darin, dass das Dichtungselement aus einem weniger komprimierbaren Material mit höherer Stauchhärte besteht (beispielsweise Teflon oder Polyurethan) und dass die Vorspannung der Dichtungsfläche gegenüber dem Walzenkörper durch eine zusätzliche Vorrichtung, wie etwa eine mechanische, hydraulische oder pneumatische Feder, erfolgt.

In der erfindungsgemäßen Ausführungsform besteht der Grundkörper des Dichtungselements aus einem elastischen Material, dessen Stauchhärte die Vorspannung der Dichtungsfläche gegenüber dem Walzenkörper bewirkt. Zusätzlich kann die Dichtungsfläche aus einem weniger komprimierbaren Material mit höherer Stauchhärte beschichtet sein, um an dieser Stelle den Verschleiß zu reduzieren.

Nach einer weiteren Ausführungsform, welche nicht Teil der Erfindung ist, ist vorgesehen, dass das Dichtungselement aus einem Formkörper besteht, der von einem von dem Fluid durchströmten, elastischen Schlauch umgeben ist, .wobei ein Teil des Schlauches die Dichtungsfläche bildet und die mindestens eine Strömungsaustrittsöffnung aufweist. Nachdem die Rakelkammer an der Rasterwalze angestellt wurde, wird der Schlauch von dem Fluid durchströmt, wobei sich dabei der Schlauch ähnlich wie ein Fahrradschlauch beim Aufpumpen eines Fahrradreifens an die Begrenzungsflächen dichtend anlegt.
Aus den obigen Erläuterungen wird deutlich, dass bei Bedarf nicht nur eine, sondern mehrere Strömungsaustrittsöffnungen entlang der Dichtungsfläche vorgesehen werden können, um die Vorteile der Erfindung weiter zu steigern.
Nach einer weiteren bevorzugten Ausführungsform ist vorgesehen, dass der Überdruck des Fluides durch eine Druckleitung bereitgestellt wird, an der eine Druckmesseinrichtung angeschlossen ist, deren Messwerte an eine Überwachungvorrichtung übertragbar sind. Auf diese Weise kann sowohl ein unerwünschter Druckanstieg (z.B. bei einer verstopften Strömungsaustrittsöffnung) als auch ein unerwünschter Druckabfall (z.B. aufgrund von Leckagen) erkannt werden. Dabei ist ein unerwünschter Druckanstieg in der Regel ein Indikator dafür, dass das Dichtungselement ausgetauscht werden muss. Sobald dieser Fall von der Überwachungsvorrichtung erkannt wird, kann die Überwachungsvorrichtung also eine entsprechende Warnmeldung an den Bediener der Druckmaschine abgeben, dass das betreffende Dichtungselement ausgetauscht werden muss.
Weitere Einzelheiten und Vorteile der Erfindung werden anhand der beigefügten Zeichnungen beschrieben, wobei die Ausführungsbeispiele der Figuren 3-6 nicht Teil der Erfindung sind. In diesen zeigen:
- Fig. 1: eine perspektivische Ansicht der Stirnseite einer Rakelkammer gemäß einem ersten Ausführungsbeispiel der Erfindung,
- Fig. 2: eine perspektivische Ansicht eines Dichtungselements gemäß einem zweiten Ausführungsbeispiel der Erfindung,
- Fig. 3: eine schematische Seitenansicht einer Rakelkammer gemäß einem dritten Ausführungsbeispiel,
- Fig. 4: eine schematische Seitenansicht einer Rakelkammer gemäß einem vierten Ausführungsbeispiel,
- Fig. 5: eine perspektivische Ansicht der Stirnseite einer Rakelkammer gemäß einem fünften Ausführungsbeispiel, und
- Fig. 6: eine perspektivische Ansicht der Stirnseite einer Rakelkammer gemäß einem sechsten Ausführungsbeispiel.
Gemäß einem ersten Ausführungsbeispiel der Erfindung zeigt Fig. 1 eine perspektivische Ansicht der Stirnseite einer Rakelkammer 101 mit einem Dichtungselement 102 und einem Stirnblech 103.
Die Rakelkammer 101 umfasst einen Rahmenträger 104, auf dem die Farbkammer 105 sitzt. An den Längsseiten der Farbkammer sind Halteschienen 106, 107 zum Befestigen der Rakelmesser vorgesehen. Unter der Farbkammer 105 befinden sich die Farbzuleitung 108 sowie die Farbabführleitung 109 zum Betreiben des Farbkreislaufs.
Direkt an der Stirnseite der Rakelkammer ist eine Passform 110 für das Dichtungselement 102 vorgesehen. In die Passform 110 ragt ein Druckluftpin 111 hinein, der über die Druckluftleitung 112 und den Druckluftanschluss 113 mit Druckluft versorgt wird.
Die Dichtungsfläche 114 des Dichtungselements 102 weist eine Druckluftaustrittsöffnung 115, die mit der Unterseite des Dichtungselements 102 durch einen Druckluftkanal 116 verbunden ist. Die Druckluftaustrittsöffnung 115 ist auf der Dichtungsfläche 114 etwas seitlich versetzt angeordnet, da im Betrieb ein Großteil des Strömungsfilms von der Rasterwalze in Drehrichtung 117 transportiert wird und sich nur ein geringerer Teil des Strömungsfilms gegen die Drehrichtung 117 ausbreitet. Um diesem Umstand Rechnung zu tragen, ist es auch möglich, mehrere Druckluftaustrittsöffnungen 115 vorzusehen.

Der Druckluftpin 111 weist einen größeren Durchmesser als der Druckluftkanal 116 innerhalb des Dichtungselements 102 auf, sodass der Druckluftkanal 116 den Druckluftpin 111 bei Normaldruck dichtend umschließt. Entsteht aus irgendeinem Grund allerdings ein zu hoher Druck in der Druckluftleitung 112, dann wirkt der elastische Druckluftkanal 116 als Überdruckventil. Ein zu hoher Druck im System kann beispielsweise durch ein Verstopfen der Druckluftaustrittsöffnung 115 verursacht werden. Zur Überwachung der Funktion des gesamten Dichtungselements 102 ist es daher auch denkbar, ein Druckmanometer an die Druckluftleitung 112 anzuschließen, um auf diese Weise sowohl einen unerwünschten Druckanstieg (z.B. bei einer verstopften Druckluftaustrittsöffnung 115) als auch einen unerwünschten Druckabfall (z.B. aufgrund von Leckagen) zu erkennen.

Zur Inbetriebnahme der Rakelkammer wird das Dichtungselement 102 in die Passform 110 eingesetzt, sodass der Druckluftpin 111 in den Druckluftkanal 116 hineinragt. Zur Sicherung des Dichtungselements 102 wird das Stirnblech 103 vor dem Dichtungselement 102 befestigt. Zu diesem Zweck sind an dem Stirnblech 103 die Aussparungen 118, 119 vorgesehen, die mit den auf Bolzen befestigten Klemmscheiben 120, 121 derart korrespondieren, dass sich das Stirnblech 103 hinter den Klemmscheiben 120, 121 einrasten lässt. Zur besseren Handhabung des Stirnblechs 103 sind die Grifflöcher 122, 123 vorgesehen.

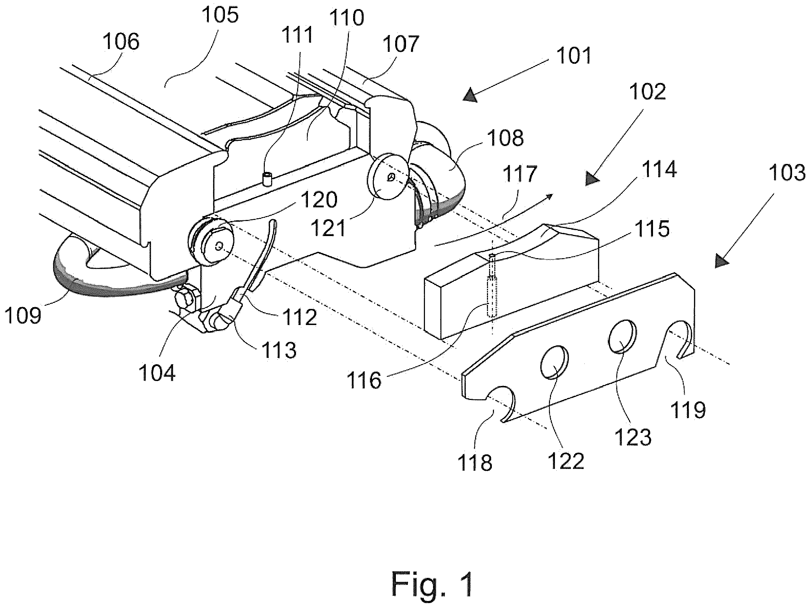

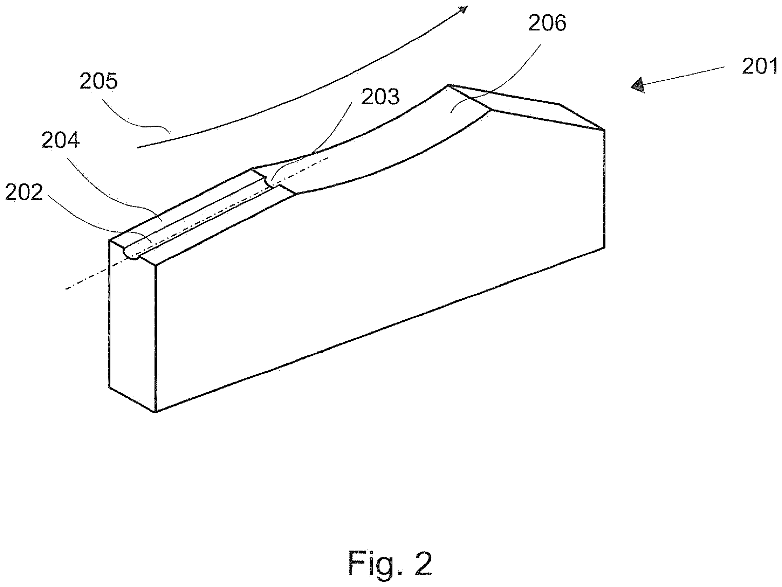

Nachdem auch die Rakelmesser montiert wurden, wird die Rakelkammer 101 gegen die Rasterwalze der Flexodruckmaschine angestellt und der Farbkreislauf in Betrieb genommen. Gleichzeitig wird auch die Druckluftleitung 112 mit Druckluft beaufschlagt, beispielsweise mit einem Druck von 4 bar. Über den Druckluftpin 111 gelangt die Druckluft in den Druckluftkanal 116 und tritt an der Druckluftaustrittsöffnung 115 mit einem Druck von ca. 1,8 bar aus. Die derart austretende Druckluft bildet zwischen der Dichtungsfläche 114 und der Rasterwalzenoberfläche einen Strömungsfilm, mit dem sich die oben bereits beschriebenen Wirkungen der Erfindung erzielen lassen. Die Strömungsaustrittsöffnung kann beispielsweise einen Durchmesser von 0,5 mm aufweisen, durch die im Betrieb eine Luftströmungsmenge von 2 Liter/Minute hindurchtritt. Das heißt, dass bereits geringe Luftmengen ausreichen, um die erfindungsgemäßen Wirkungen erzielen zu können.
An der Druckluftleitung 112 ist eine nicht weiter gezeigte Druckmesseinrichtung angeschlossen, um den Luftdruck überwachen zu können. Die Messwerte der Druckmesseinrichtung werden eine Überwachungvorrichtung übertragen, sodass der Bediener der Druckmaschine die Werte bei Bedarf ablesen kann. Sobald der Druck in der Druckluftleitung 112 über eine bestimmte Schwelle ansteigt, wird von der Überwachungsvorrichtung eine Warnmeldung ausgegeben. In der Regel bedeutet diese Warnmeldung, dass die Druckluftaustrittsöffnung 115 verstopft ist, sodass das Dichtelement 102 ausgetauscht werden muss.
Gemäß einem zweiten Ausführungsbeispiel der Erfindung zeigt Fig. 2 eine perspektivische Ansicht eines Dichtungselements 201. Das Dichtungselement 201 unterscheidet sich gegenüber dem Dichtungselement 102 gemäß Fig. 1 dadurch, dass nunmehr ein offener Druckluftkanal 202 vorgesehen ist, der zu der ebenfalls offenen Druckluftaustrittsöffnung 203 führt. Im Betrieb liegt an der geraden Fläche 204 allerdings ein Rakelmesser an, sodass dann der Druckluftkanal 202 und die Druckluftaustrittsöffnung 203 geschlossen sind. In entsprechender Weise wie in dem Ausführungsbeispiel gemäß Fig. 1 wird der Druckluftkanal 202 dann mit Druckluft beaufschlagt, sodass die Druckluft durch die Druckluftaustrittsöffnung 203 austritt und von der Rasterwalze in die Drehrichtung 205 über die Dichtungsfläche 206 verteilt wird. Insgesamt lassen sich auf diese Weise die gleichen Wirkungen der Erfindung wie in dem Ausführungsbeispiel gemäß Fig. 1 erzielen. Es ist auch möglich, an einem Dichtungselement sowohl einen Druckluftkanal 116 gemäß Fig. 1, als auch einen Druckluftkanal 202 gemäß Fig. 2 vorzusehen.

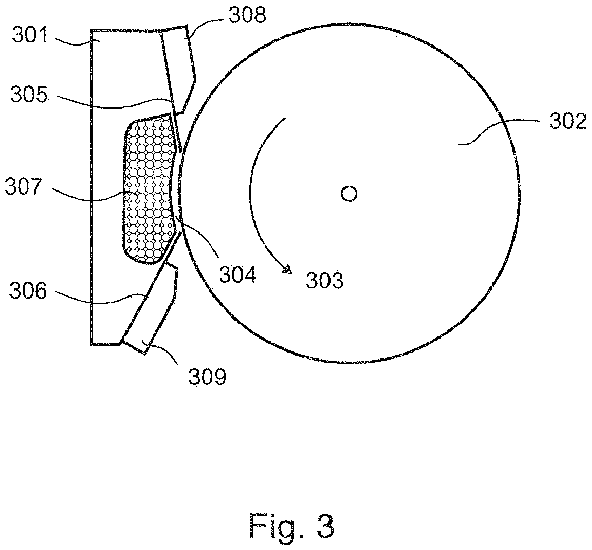

Gemäß einem dritten Ausführungsbeispiel zeigt Fig. 3 eine schematische Seitenansicht einer Rakelkammer 301 in Druckbetriebsposition, die an einer Rasterwalze 302 einer Flexodruckmaschine angestellt ist. Die Rasterwalze 302 dreht sich im Betrieb in Richtung des Pfeils 303 und nimmt in der Farbkammer 304 Farbe auf. Die Farbkammer 304 wird wiederum durch die Rasterwalze 302, das Schließrakel 305, das Arbeitsrakel 306 sowie stirnseitig jeweils durch das Dichtungselement 307 begrenzt. Das Schließrakel 305 und das Arbeitsrakel 306 sind durch die Halteschienen 308 und 309 auf der Rakelkammer 301 befestigt.

Das Dichtungselement 307 besteht aus einem porösen Material, beispielsweise aus mikroporösem Teflon. An das Dichtungselement 307 ist ein nicht weiter gezeigter Druckluftadapter derart angekoppelt, dass im Bereich des Dichtungselements 307 Druckluft an der Dichtungsfläche austritt, sodass sich zwischen der Dichtungsfläche des Dichtungselements 307 und der Oberfläche der Rasterwalze 302 ein Druckluft-Strömungsfilm ausbildet, mit dem sich wiederum die oben bereits beschriebenen Wirkungen der Erfindung erzielen lassen.

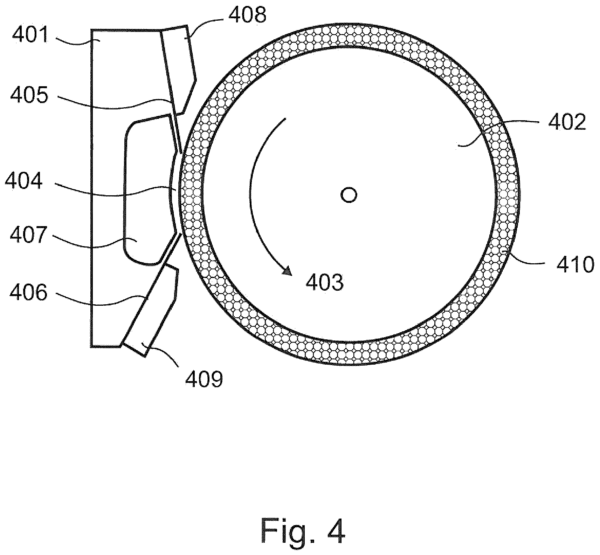

Gemäß einem vierten Ausführungsbeispiel zeigt Fig. 4 eine schematische Seitenansicht einer Rakelkammer 401 in Druckbetriebsposition, die an einer Rasterwalze 402 einer Flexodruckmaschine angestellt ist. Die Rasterwalze 402 dreht sich im Betrieb in Richtung des Pfeils 403 und nimmt in der Farbkammer 404 Farbe auf. Die Farbkammer 404 wird wiederum durch die Rasterwalze 402, das Schließrakel 405, das Arbeitsrakel 406 sowie stirnseitig jeweils durch das Dichtungselement 407 begrenzt. Das Schließrakel 405 und das Arbeitsrakel 406 sind durch die Halteschienen 408 und 409 auf der Rakelkammer 401 befestigt.

Die Rasterwalze 402 weist in der Schnittebene eine poröse Oberfläche 410 auf, sodass das vierte Ausführungsbeispiel quasi eine Umkehrung des Prinzips des dritten Ausführungsbeispiels darstellt. Innerhalb der Rasterwalze 402 befindet sich ein nicht weiter gezeigter Druckluftadapter, der an die poröse Oberfläche derart angekoppelt ist, dass im Bereich des Dichtungselements 407 Druckluft an der porösen Oberfläche 410 austritt, sodass sich zwischen der Dichtungsfläche des Dichtungselements 407 und der porösen Oberfläche 410 ein Druckluft-Strömungsfilm ausbildet, mit dem sich wiederum die oben bereits beschriebenen Wirkungen der Erfindung erzielen lassen.

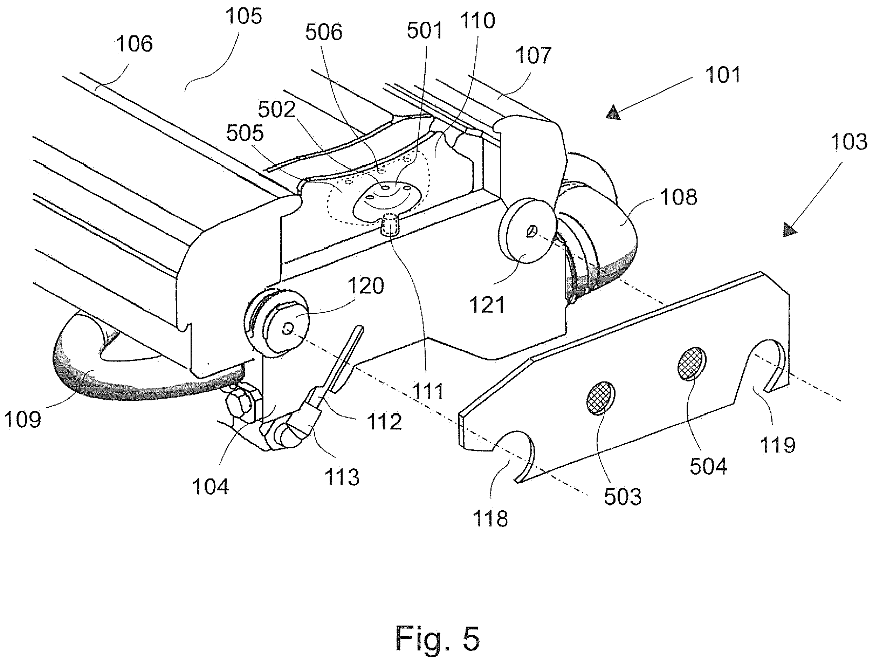

Gemäß einem fünften Ausführungsbeispiel zeigt Fig. 5 eine perspektivische Ansicht der Stirnseite einer Rakelkammer. Gegenüber Fig. 1 sind gleiche Teile mit gleichen Bezugszeichen versehen, sodass insoweit auf die obige Beschreibung gemäß Fig. 1 verwiesen werden kann. Ein entscheidender Unterschied gegenüber dem ersten Ausführungsbeispiel gemäß Fig. 1 besteht bei dem fünften Ausführungsbeispiel gemäß Fig. 5 darin, dass statt des Dichtungselements 102 nunmehr ein Dichtungsballon 501 vorgesehen ist. Das elastische Material des Dichtungsballons 501 muss dabei derart gewählt werden, dass dieses sowohl gegenüber der Druckfarbe als auch gegenüber dem durchströmenden Fluid ausreichend beständig ist. Ein Material, das sowohl gegenüber Wasser, als auch gegenüber Ethanol und Druckfarbe beständig ist, wäre beispielsweise EPDM (Ethylen-Propylen-Dien-Kautschuk). Der bekannte Butylkautschuk, womit auch herkömmliche Fahrradschläuche hergestellt werden (Kurzzeichen IIR bzw. Isobuten-Isopren-Copolymer) ist demgegenüber nur gegen Wasser und wasserlösliche Farben ausreichend beständig und kommt daher für Ethanol und ethanol-lösliche Farben nicht in Betracht.
Der Dichtungsballon 501 ist in der Passform 110 mit dem Druckluftpin 111 dichtend verbunden. An seiner Oberseite weist der Dichtungsballon 501 eine oder mehrere Druckluftaustrittsöffnungen 502 auf.
Zur Inbetriebnahme der Rakelkammer 101 wird das Stirnblech 103 mit den Aussparungen 118, 119 an den Klemmscheiben 120, 121 befestigt. Die Grifflöcher 503, 504 des Stirnblechs 103 sind auf der der Rakelkammer 101 zugewandten Seite mit einem Gitter oder etwas Ähnlichem versehen, um zu verhindern, dass der Dichtungsballon 501 in seinem aufgeblasenen Zustand aus den Grifflöchern 503, 504 herausquillt. Sodann wird die Rakelkammer 101 gegen die Rasterwalze der Flexodruckmaschine angestellt, sodass die Passform 110 nach allen Seiten geschlossen ist. Bevor der Farbkreislauf nunmehr in Betrieb genommen wird, wird der Dichtungsballon 501 innerhalb der Passform 110 auf seine endgültige Größe aufgeblasen, sodass der Dichtungsballon 501 sich ähnlich wie ein Fahrradschlauch beim Aufpumpen eines Fahrradreifens an die Begrenzungsflächen der Passform 110 dichtend anlegt. Es entsteht somit eine flexible Dichtung, mit der auch Dichtungsprobleme beherrscht werden können, die nach dem Stand der Technik nicht gelöst werden konnten, wie etwa der Verschleiß der Rakelmesser oder auch während des Druckprozesses auftretende, starke Vibrationen.
Mit gestrichelten Linien wird der Dichtungsballon in einem halbaufgeblasenen Zustand 505 gezeigt. Es wird deutlich, dass sich die Druckluftaustrittsöffnungen von ihrer ursprünglichen Position 502 nunmehr in die Position 506 bewegt haben und damit an der Rasterwalze anliegen und somit die erwünschte Dichtungsfläche bilden.
Um die Reibung zwischen der Rasterwalze und dem Dichtungsballon 501 zu verringern und gleichzeitig die Dichtungswirkung zu erhöhen, kann die Oberfläche des Dichtungsballons in der bereits beschriebenen Weise beschichtet sein. Zusätzlich oder alternativ kann das Fluid in der ebenfalls bereits beschriebenen Weise mit einem weiteren Fluid und/oder mit Partikeln angereichert werden, die sich im Strömungsfilm ausbreiten und die Dichtungswirkung erhöhen.

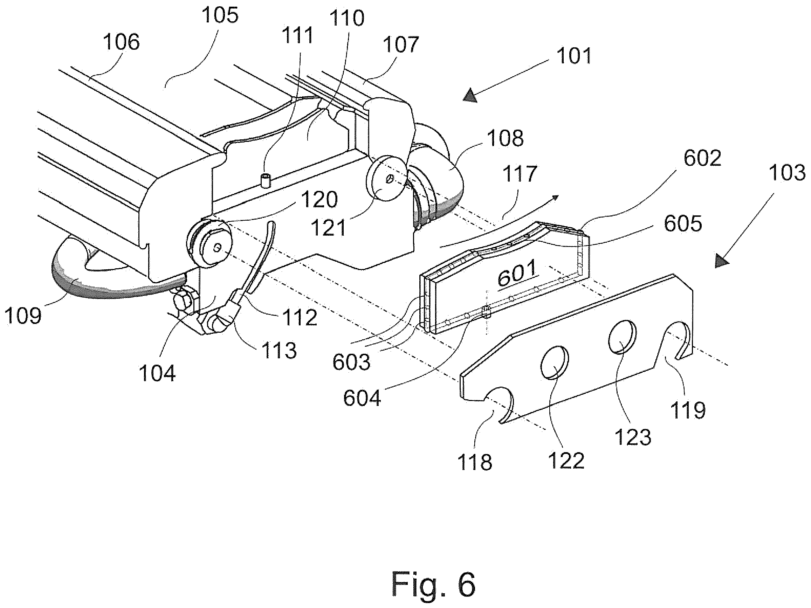

Gemäß einem sechsten Ausführungsbeispiel zeigt Fig. 6 eine perspektivische Ansicht der Stirnseite einer Rakelkammer. Gegenüber Fig. 1 sind gleiche Teile mit gleichen Bezugszeichen versehen, sodass insoweit auf die obige Beschreibung gemäß Fig. 1 verwiesen werden kann. Ein entscheidender Unterschied gegenüber dem ersten Ausführungsbeispiel gemäß Fig. 1 besteht bei dem sechsten Ausführungsbeispiel gemäß Fig. 6 darin, dass statt des Dichtungselements 102 nunmehr eine Dichtungsform 601 mit einem umlaufenden Schlauch 602 vorgesehen ist. Die Hilfslinien 603 deuten die Schlauchform längs des Umfangs an. Der Schlauch 602 weist an der Unterseite der Dichtungsform 601 einen Anschluss-Stutzen 604 auf, der dichtend über den Druckluftpin 111 gestülpt werden kann. Außerdem weist der Schlauch 602 an der Oberseite der Dichtungsform 601 eine oder mehrere Druckluftaustrittsöffnungen auf.
Die Inbetriebnahme der Rakelkammer 101 erfolgt analog wie beim fünften Ausführungsbeispiel: Zunächst wird das Stirnblech 103 mit den Aussparungen 118, 119 an den Klemmscheiben 120, 121 befestigt. Sodann wird die Rakelkammer 101 gegen die Rasterwalze der Flexodruckmaschine angestellt, sodass die Passform 110 nach allen Seiten geschlossen ist. Bevor der Farbkreislauf nunmehr in Betrieb genommen wird, wird der Schlauch 602 innerhalb der Passform 110 auf seine endgültige Größe aufgeblasen, sodass der Schlauch 602 sich ähnlich wie ein Fahrradschlauch beim Aufpumpen eines Fahrradreifens an die Begrenzungsflächen der Passform 110 dichtend anlegt. Die Druckluftaustrittsöffnungen 605 liegen dabei an der Rasterwalze an und bilden somit die erwünschte Dichtungsfläche. Es entsteht somit eine flexible Dichtung, mit der auch Dichtungsprobleme beherrscht werden können, die nach dem Stand der Technik nicht gelöst werden konnten, wie etwa der Verschleiß der Rakelmesser oder auch während des Druckprozesses auftretende, starke Vibrationen.

## Patentansprüche

1. Dichtungselement (102, 201) für die stirnseitige Abdichtung einer Rakelkammer (105) einer Flexodruckmaschine,
mit einer Dichtungsfläche (114, 206), die im Betrieb der Flexodruckmaschine an einem Walzenkörper anliegt,
mit einem Grundkörper, der an den Stirnseiten der Rakelkammer in eine jeweils dafür vorgesehene Passform (110) einsetzbar ist, wobei der Grundkörper des Dichtungselements aus einem elastischen Material besteht, dessen Stauchhärte die Vorspannung der Dichtungsfläche gegenüber dem Walzenkörper bewirkt, und
wobei die Dichtungsfläche mindestens eine Druckluftaustrittsöffnung (115, 203) aufweist,
an der im Betrieb der Flexodruckmaschine Druckluft derart austritt, dass die Druckluft zwischen Dichtungsfläche und Walzenkörper einen dichtenden Strömungsfilm bildet.

2. Dichtungselement nach Anspruch 1, wobei die Dichtungsfläche gegenüber dem Grundkörper zur Reduzierung des Verschleißes mit einem weniger komprimierbaren Material mit höherer Stauchhärte beschichtet ist.

3. Dichtungselement nach einem der Ansprüche 1 - 2, wobei die Druckluft mit mindestens einem weiteren Fluid angereichert ist, das sich im Strömungsfilm ausbreitet und die Dichtungswirkung erhöht.

4. Dichtungselement nach einem der Ansprüche 1 - 3, wobei der Überdruck der Druckluft durch eine Druckleitung bereitgestellt wird, an der eine Druckmesseinrichtung angeschlossen ist, deren Messwerte an eine Überwachungvorrichtung übertragbar sind.

5. Verfahren zum Betreiben einer Flexodruckmaschine mit einer Rakelkammer, deren Stirnseiten im Betrieb jeweils von einem an einem Walzenkörper anliegenden Dichtungselement nach einem der Ansprüche 1 - 4 abgedichtet werden,
wobei das Dichtungselement an den Stirnseiten der Rakelkammer in eine jeweils dafür vorgesehene Passform eingesetzt wird,
wobei im Betrieb eine Verbindung zwischen der Druckluftaustrittsöffnung und einer Druckluftleitung hergestellt wird, und
wobei in der Druckluftleitung ein Überdruck derart aufgebaut wird, dass die Druckluft zwischen Dichtungsfläche und Walzenkörper einen dichtenden Strömungsfilm bildet.

## Claims

1. A sealing element (102, 201) for the end-face sealing of a doctor blade chamber (105) of a flexographic printing machine,
having a sealing surface (114, 206),
which in the operation of the flexographic printing machine abuts against a roller body, having a base body, which can be inserted at the end faces of the doctor blade chamber into a fitting (110) provided in each case therefor, wherein the base body of the sealing element consists of an elastic material, the compression hardness of which causes the pre-tension of the sealing surface relative to the roller body, and
wherein the sealing surface has at least one compressed air outlet opening (115, 203), at which in the operation of the flexographic printing machine compressed air exits in such a manner that the compressed air between the sealing surface and the roller body forms a sealing flow film.

2. A sealing element according to Claim 1, wherein the sealing surface is coated with a less compressible material with higher compression hardness than the base body in order to reduce wear.

3. A sealing element according to any one of Claims 1 to 2, wherein the compressed air is enriched with at least one further fluid, which spreads in the flow film and increases the sealing effect.

4. A sealing element according to any one of Claims 1 to 3, wherein the overpressure of the compressed air is provided by a pressure line, to which a pressure-measuring device is connected, the measured values of which can be transferred to a monitoring device.

5. A method for the operation of a flexographic printing machine having a doctor blade chamber, the end faces of which in operation are in each case sealed by a sealing element abutting against a roller body according to any one of Claims 1 to 4,
wherein the sealing element is inserted at the end faces of the doctor blade chamber into a fitting provided in each case therefor,
wherein in the operation a connection is established between the compressed air outlet opening and a compressed air line, and
wherein in the compressed air line an overpressure is established in such a manner that the compressed air forms a sealing flow film between the sealing surface and the roller body.

## Revendications

1. Élément d'étanchéité (102, 201) pour l'étanchéification frontale d'une chambre à racles (105) d'une machine de flexographie,
avec une surface d'étanchéité (114, 206) qui s'appuie, lors du fonctionnement de la machine de flexographie, contre un corps de rouleau,
avec un corps de base qui peut être inséré au niveau des faces frontales de la chambre à racles, dans une forme ajustée (110) prévue à cet effet, le corps de base de l'élément d'étanchéité étant constitué d'un matériau élastique, dont la résistance à la compression provoque la précontrainte de la surface d'étanchéité par rapport au corps de rouleau et
la surface d'étanchéité comprenant au moins une ouverture de sortie d'air comprimé (115, 203) au niveau de laquelle, lors du fonctionnement de la machine de flexographie, de l'air comprimé sort de façon à ce que l'air comprimé forme, entre la surface d'étanchéité et le corps de rouleau, un film d'écoulement étanche.

2. Élément d'étanchéité selon la revendication 1, la surface d'étanchéité étant revêtu, pour la réduction de l'usure, avec un matériau moins compressible avec une résistance à la compression plus élevée par rapport au corps de base.

3. Élément d'étanchéité selon l'une des revendications 1 à 2, l'air comprimé étant enrichi avec un autre fluide qui se propage dans le film d'écoulement et augmente l'effet d'étanchéité.

4. Élément d'étanchéité selon l'une des revendications 1 à 3, la surpression de l'air comprimé étant mise à disposition par l'intermédiaire d'une conduite de pression à laquelle est raccordé un dispositif de mesure de pression dont les valeurs de mesure peuvent être transmises à un dispositif de surveillance.

5. Procédé d'exploitation d'une machine de flexographie avec une chambre à racles, dont les faces frontales sont étanchéifiées, pendant le fonctionnement par un élément d'étanchéité s'appuyant contre chaque corps de rouleau, selon l'une des revendications 1 à 4,
l'élément d'étanchéité étant inséré au niveau des faces frontales dans une forme ajustée prévue à cet effet,
pendant le fonctionnement, une liaison entre l'ouverture de sortie d'air comprimé et une conduite d'air comprimé étant établie et
dans la conduite d'air comprimé, une surpression étant générée de façon à ce que l'air comprimé forme, entre la surface d'étanchéité et le corps de rouleau, u film d'écoulement étanche.
